# EUROPEAN PATENT APPLICATION

(11) **EP 2 469 661 A1**
(43) Date of publication of application: **27.06.2012**
(21) Application number: 10290669.0
(22) Date of filing: 21.12.2010
(51) Int. Cl.: H01R 13/52

(54) **Connector with enclosure for electrical contacting means of the connector**

(71) Applicant: Alcatel Lucent, 75007 Paris (FR)
(72) Inventor: Reimann, Karl-Heinz, 30853 Langenhagen (DE); Harutyunyan, Gurgen, 30165 Hannover (DE); Schomburg, Ekkehard, 30938 Burgwedel (DE); Brunsch, Dietmar, 30519 Hannover (DE)
(74) Representative: Wetzel, Emmanuelle

(57) **Abstract**

The invention relates to a connector (CON1, CON2) comprising a first enclosure (ENCL1_CON1_P1, ENCL1_CON1_P2) and at least one electrical contacting means (CE1_out_1, CE1_out_2, CP_out_1, CE1_in_1, CE1_in_2), the first enclosure (ENCL1_CON1_P1, ENCL1_CON1_P2) comprises an inlet (INL) for a first cable (CABLE1) and an outlet (OUTL) for the first cable (CABLE1), the first enclosure (ENCL1_CON1_P1, ENCL1_CON1_P2), the inlet (INL) and the outlet (OUTL) are adapted to completely enclose a first electrical connection between the at least one electrical contacting means (CE1_out_1, CE1_out_2, CP_out_1, CE1_in_1, CE1_in_2) of the connector (CON1, CON2) and at least one conductor (COND_in, COND_out) of the first cable (CABLE1). The invention further relates to an assembly (ASBY1) comprising the connector (CON1, CON2) and the first cable (CABLE1) connected to the connector (CON1, CON2).

## Description

### FIELD OF THE INVENTION

The invention relates to a connector comprising an enclosure and at least one electrical contacting mans and to an assembly comprising the connector and a cable connected to the connector.

### BACKGROUND

In conventional cellular mobile communication systems such as GSM (GSM = Global System for Mobile Communication) or UMTS (UMTS = Universal Mobile Telecommunication Systems) a data connection link is required between a base station and an on-site passive antenna or a data connection such as an optical fiber and a power line are required between the base station and an on-site active antenna such as an RRH (RRH = radio remote head). The use of optical fibres between a base station rack of the base station and antennas of the base station are known as FTTA (FTTA = fibre to the antenna).

Advantages of using the RRH and the optical fiber such as low losses on the optical fibre, bridging large distances between the base station and the RRH and reduced energy consumption are accompanied by the need of applying a separate cable connection for the power supply. Conventionally, data connection links between the base station and the antennas of the base station are separated in uplink communication links and downlink communication links.

The radio cell of the base station may be split into 3 radio sectors with a 120 degree of arc coverage of each radio sector or into 6 radio sectors with a 60 degree of arc coverage of each radio sector. Each radio sector is served by a separate antenna. This means that usually 6 or 12 data connection links need to be installed between a base station rack of the base station and the antennas of the base station.

Data rates in future radio communication systems such as HSPA (HSPA = High Speed Packet Access) or LTE (LTE = Long Term Evolution) will be increased by using a MIMO transmission (MIMO = multiple input multiple output) between the base station and a mobile station. This requires additional or new connections to be installed between the base station and a location of MIMO antenna systems.

Hybrid cables comprising at least one optical conductor and at least one optical fiber can be used to combine the data connection link and the power line into a transmission line with a single protective outer layer.

A coaxial connector with a saddle adapted to be connected to an outer conductor of a coaxial cable and with an inner conductive element adapted to be connected to an inner conductor of the coaxial cable can be laterally connected to the coaxial cable for connecting a branch line to a coaxial distribution cable instead of applying the coaxial connector to an end face of the coaxial distribution cable.

### SUMMARY

The way of applying a connector to a cable affects installation effort, installation costs and sealing conditions.

Therefore, it is an object of the invention to reduce the installation effort and the installation costs and to improve the sealing conditions.

The object is achieved by a connector comprising a first enclosure and at least one electrical contacting means. The first enclosure comprises an inlet for the first cable and an outlet for the first cable. The first enclosure, the inlet and the outlet are adapted to completely enclose a first electrical connection between the at least one electrical contacting means of the connector and the at least one conductor of the first cable.

The object is further achieved by an assembly comprising a cable and a connector connected to the cable.

The first cable may be for example a hybrid cable comprising electrical conductors and one or several optical fibres or a coaxial cable comprising one or several additional conductors inside a hollow inner conductor of the coaxial cable.

The invention has a first benefit of providing a prepared installation kit.

An installer gets to the location of the RRH, cuts an existing coaxial connector of the coaxial cable previously mounted to the antenna and applies the connector laterally to the coaxial cable. There is no need to uninstall the installed coaxial cable at the antenna mast and to reinstall a new power line at the antenna mast. Thereby, the installation can be easier performed (no installation work along the antenna mast) and the installation time is considerably reduced.

The invention provides a second advantage of already providing a protection against environmental conditions by the first enclosure for the first electrical connection between the one or several electrical contacting means of the connector and the one or several conductors of the first cable. There is no need of performing any additional installation steps such as covering the first electrical connection for example by a shrinkable plastics material or by a plastic mould.

The invention provides a third benefit of not requiring additional distribution boxes for splitting for example the feeder cable into jumper cables for each RRH. The connector may take over the function of a distribution box by providing additional opening in the first enclosure for jumper cables to be connected to the electrical contacting means of the connector.

The invention provides a four benefit of providing an extension of an end piece of the first cable from the first enclosure. This allows applying further separate connectors to further conductors of the first cable or applying splices to optical fibres protruding from an end face of the first cable. The further conductors or the optical fibres may be located in an inner hollow conductor of the first cable or between an inner and a concentric outer conductor of the first cable.

Further advantageous features of the invention are defined and are described in the following detailed description of the invention.

### BRIEF DESCRIPTION OF THE FIGURES

The embodiments of the invention will become apparent in the following detailed description and will be illustrated by accompanying figures given by way of non-limiting illustrations.
Figure 1 shows schematically a block diagram of a connector in two cross-sectional views according to an exemplarily embodiment.
Figure 2 shows schematically a block diagram of an assembly in a perspective view according to an exemplarily embodiment.
Figure 3 shows schematically a block diagram of an assembly in a perspective view according to a further exemplarily embodiment.
Figure 4 shows schematically a block diagram of a base station according to an application of the invention.

### DESCRIPTION OF THE EMBODIMENTS

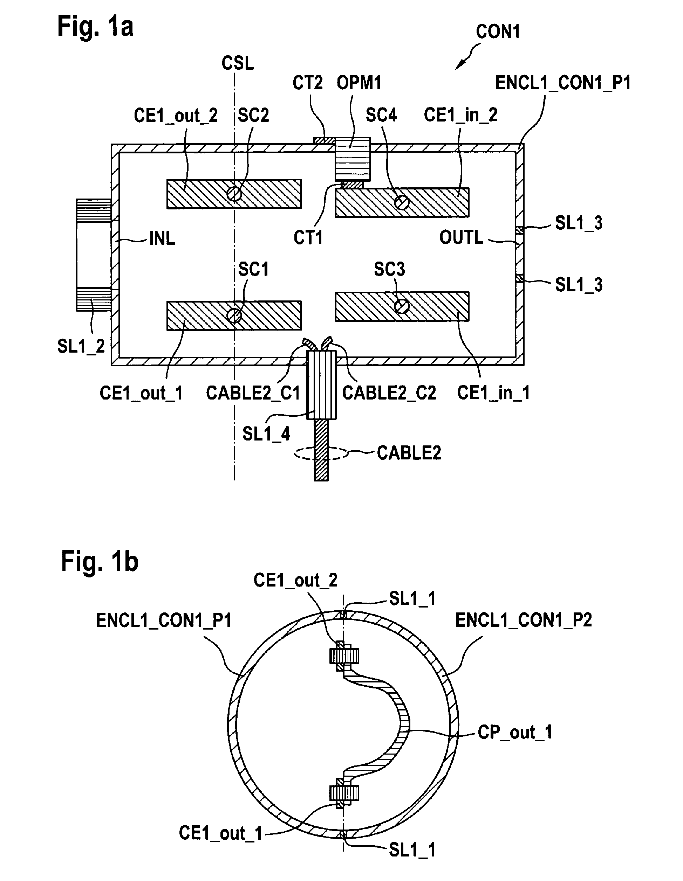

Figure 1 shows schematically a block diagram of a connector CON1 in two cross-sectional views according to an exemplarily embodiment (see also

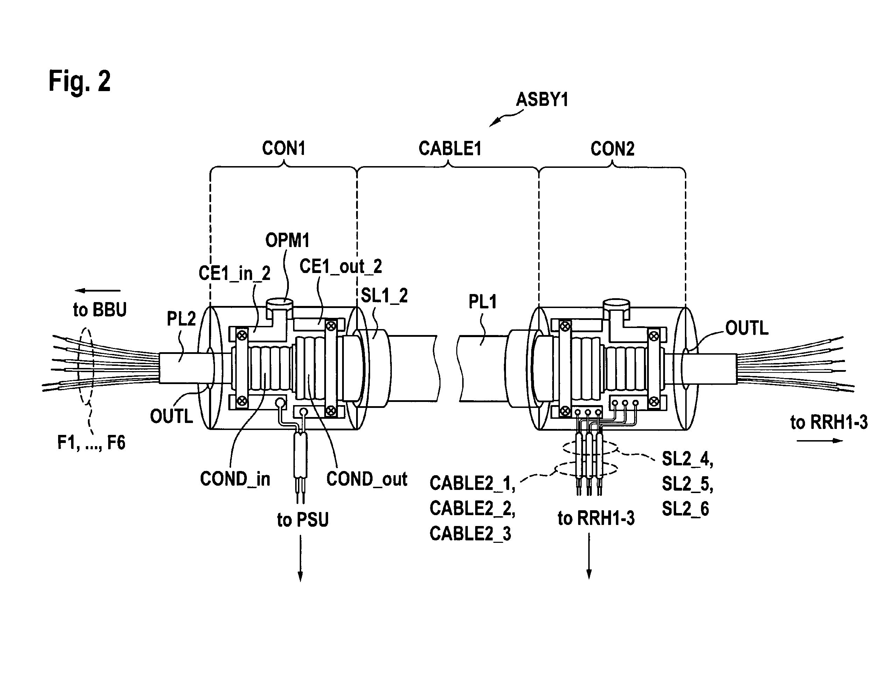

Figure 2 showing the connector CON1 rotated by 180 degree). Figure 1 b) shows a cross-sectional view of the cross-section line CSL shown in Figure 1 a).

The connector CON1 comprises a first enclosure ENCL1_CON1_P1, ENCL1_CON1_P2, first electrical contacting means CE1_out_1, CE1_out_2, CP_out_1 and preferably second electrical contacting means CE1_in_1, CE1-in-2.

Alternatively, the connector CON1 may comprise only single electrical contacting means or more than two electrical contacting means. If the connector CON 1 comprises only single electrical contacting means, a further connector comprising further single electrical contacting means may be used to obtain a closed electrical circuit.

The first enclosure ENCL1_CON1_P1, ENCL_1CON_1_P2 may have preferably a geometrical form of a hollow cylinder with end faces closed by circular plates each comprising a central opening. A first one the central openings is used as an inlet INL for a first cable and a second one of the central openings is used as an outlet OUTL for the first cable. Alternatively, the geometrical form of the first enclosure ENCL1_CON1_P1, ENCL1_CON1_P2 may be for example a rectangular box. Other geometrical shapes may be also applied.

The first enclosure ENCL1_CON1_P1, ENCL1_CON 1_P2, the inlet INL and the outlet OUTL are adapted to completely enclose a first electrical connection between the first electrical contacting means CE1_out_1, CE1_out_2, CP_out_1 and a first conductor of the first cable and a second electrical connection between the second electrical contacting means CE1_in_1, CE1_in_2 and a second conductor of the first cable.

The first enclosure ENCL1_CON1_P1, ENCL1_CON1_P2 may be split into a first part ENCL1_CON1_P1 comprising the first electrical contacting means CE1_out_1, CE1_out_2, CP_out_1 and the second electrical contacting means CE1_in_1, CE1_in_2 and a second part ENCL1_CON1_P2 removable from the first part ENCL1_CON1_P1. The fixation between the first part ENCL1_CON1_P1 and the second part ENCL1_CON1_P2 may be performed by fixation means such as screws or clamps known by a person skilled in the art. The second part ENCL1_CON1_P2 is preferably movable from the first part ENCL1_CON1_P1 for being able to make a secure and reliable electrical contact between the first and the second electrical contacting means CE1_out_1, CE1_out_2, CP_out_1, CE1_in_1, CE1_in_2 of the connector CON1 and conductors of a cable such as a coaxial cable.

The first and the second part ENCL1_CON1_P1, ENCL1_CON1_P2 may be for example half shells of the hollow cylinder (see Figure 1 b)). Alternatively, the first part ENCL1_CON1_P1 may comprise a largest part of the first enclosure ENCL1_CON1_P1, ENCL1_CON1_P2 and the second part ENCL1_CON1_P2 allows only access to fixation means such as screws of the first and the second electrical contacting means CE1_out_1, CE1_out_2, CP_out_1, CE1_in_1, CE1_in_2 for fixing the conductors of the cable to the first and the second electrical contacting means CE1_out_1, CE1_out_2, CP_out_1, CE1_in_1, CE1_in_2.

Preferably, the first enclosure comprises a first sealing SL1 _1 (see Figure 1 b)) between the first part ENCL1_CON1_P1 and the second part ENCL1_CON1_P2. The first sealing SL1_1 may be for example a rubber gasket mounted on a border strip of the first part ENCL1_CON1_P1 facing towards a border strip of the second part ENCL1_CON1_P2.

In a further alternative, it may be also possible contacting the first and the second electrical contacting means CE1_out_1, CE1_out_2, CP_out_1, CE1_in_1, CE1_in_2 to the conductors of the cable by simply pushing the cable through the connector CON1 from the inlet INL to the outlet OUTL. In such a case an opening of the first enclosure ENCL1_CON1_P1, ENCL1 _CON1_P2 may be not required and the first enclosure ENCL1_CON1_P1, ENCL1_CON1_P2 may be a single part.

Preferably, the first enclosure ENCL1_CON1_P1, ENCL1_CON1_P2 may consist of an electrical conductive material such as copper, aluminium or stainless steel. Alternatively, the first enclosure ENCL1_CON1_P1, ENCL1_CON1_P2 may comprise for example a plastics material such as PVC or polyamide.

As shown by the exemplarily embodiment in Figure 1 a) a second sealing SL1_2 may be attached from an outside of the first enclosure ENCL1_CON1_P1, ENCL1_CON1_P2 to an inlet side of the first enclosure ENCL1_CON1_P1, ENCL1_CON1_P2. The second sealing SL1_2 may be for example a cylindrical rubber ring with an inner diameter preferably slightly smaller than an inner diameter of the inlet INL.

On an outlet side of the first enclosure ENCL1_CON1_P1, ENCL1_CON1_P2 a third sealing SL1_3 may be attached to an inside edge of the outlet OUTL. The third sealing SL1_3 may be for example an o-ring. Alternatively, a similar sealing may be applied for the outlet OUTL as those applied for the inlet INL as shown in Figure 1 a) or a similar sealing may be applied for the inlet INL as those applied for the outlet OUTL as shown in Figure 1 a).

The second sealing SL1_2 and the third sealing SL1_3 may be adapted to seal the first enclosure ENCL1_CON1_P1, ENCL1_CON1_P2 towards an outer surface of the first cable.

The first and the second electrical contacting means CE1_out_1, CE1_out_2, CP_out_1, CE1_in_1, CE1_in_2 of the connector CON1 are preferably arranged around a central longitudinal axis of the first enclosure ENCL1_CON1_P1, ENCL1_CON1_P2.

The first electrical contacting means CE1_out_1, CE1_out_2, CP_out_1 may comprise for example a first contact plate CE1_out_1, a second contact plate CE1_out_2 and a semi-circular clamp CP_out_1. The semi-circular clamp CP_out_1 may be mountable to the first and the second contact plate CE1_out_1, CE1_out_2 for example by two screws SC1, SC2. Alternatively, a flat clamp may be applied, if the first and the second contact plate CE1_out_1, CE1_out_2 are laterally displaced from a middle layer of the first enclosure ENCL1_CON1_P1, ENCL1_CON1_P2 (to the right in case of Figure 1 b)).

Similarly, the second electrical contacting means CE1_in_1, CE1_in_2 may comprise for example a first contact plate CE1_in_1, a second contact plate CE1_in_2 and a semi-circular clamp. The semi-circular clamp of the second electrical contacting means CE1_in_1, CE1_in_2 may be mountable to the first and the second contact plate CE1_in_1, CE1_in_2 of the second electrical contacting means CE1_in_1, CE1_in_2 for example by two further screws SC3, SC4.

Preferably, an inner distance between the first contact plate CE1_out_1 and the second contact plate CE1_out_2 of the first electrical contacting means CE1_out_1, CE1_out_2, CP_out_1 may be adapted to an outer diameter of a first electrical conductor of the cable such as an outer conductor of a coaxial cable and an inner distance between the first contact plate CE1_in_1 and the second contact plate CE1_in_2 of the second electrical contacting means CE1_in_1, CE1_in_2 may be adapted to an outer diameter of a second electrical conductor of the cable such as an inner conductor of a coaxial cable.

The first electrical contacting means CE1_out_1, CE1_out_2, CP_out_1 may be in electrical contact with the first enclosure ENCL1_CON1_P1, ENCL1_CON1_P2.

A fastening of the first electrical contacting means CE1_out_1, CE1_out_2, CP_out_1 and the second electrical contacting means CE1_in_1, CE1_in_2 inside the first enclosure ENCL1_CON1_P1, ENCL1_CON1_P2 of the connector CON 1 is not shown for simplification reasons. The fastening may be applied for example by moulding the first and the second electrical contacting means CE1_out_1, CE1_out_2, CP_out_1, CE1_in_1, CE1_in_2 into the first enclosure ENCL1_CON1_P1, ENCL1_CON1_P2 with a plastic material. Other fastening techniques known by a person skilled in the art may be also applied.

Preferably, the connector CON1 further comprises means for overvoltage protection OPM1 such as an overvoltage protection gas tube. The means for overvoltage protection OPM1 may be electrically connected to the second electrical contacting means CE1_in_1 CE1_in_2 with a first contact CT1 and to the first enclosure ENCL1_CON1_P1, ENCL1_CON1_P2 comprising an electrical conductive material with a second contact CT2. The second electrical contacting means CE1_in_1, CE1_in_2 are adapted to be connected to a conductor of the first cable transmitting a phase of the power supply, whereas the first electrical contacting means CE1_out_1, CE1_out_2, CP_out_1 are adapted to be connected to a further conductor of the first cable connected to electrical ground keeping the further conductor at a constant potential.

The connector CON1 further comprises preferably a cable CABLE2 (see Figure 1a)) and an opening for extending the cable CABLE2 from an inside of the first enclosure ENCL1_CON1_P1, ENCL1_CON1_P2 to an outside of the first enclosure ENCL1_CON1_P1, ENCL1_CON1_P2. Alternatively, a similar connector CON2 may comprise more than one cable (see right hand side in Figure 2). The cable CABLE2 comprises a first conductor CABLE2_C1 and a second conductor CABLE2_C2. The cable CABLE2 may comprise only one conductor, if the connector CON1 comprises single electrical contacting means or may comprise more than two conductors, if the connector CON1 comprises more than two electrical contacting means.

The first conductor CABLE2_C1 of the cable CABLE2 may be connected to the first electrical contacting means CE1_out_1, CE1_out_2, CP_out_1 and a second conductor CABLE2_C2 of the cable CABLE2 may be connected to the second electrical contacting means CE1_in_1, CE1_in_2.

Preferably, the opening of the first enclosure ENCL1_CON1_P1, ENCL1_CON1_P2 for the cable CABLE2 comprises a sealing SL1_4 between an outer surface of the cable CABLE2 and an inner edge of the first enclosure ENCL1_CON1_P1, ENCL1_CON1_P2. The sealing SL1_4 may be for example a heatschrink, a rubber ring, a jelly type of material or any other material suitable for sealing even at very low and high temperatures.

The opening for the cable CABLE2 may be arranged adjacent to the inlet INL or the outlet OUTL or at a lateral surface of the first enclosure ENCL1_CON1_P1, ENCL1_CON1_P2 (see Figure 1 a)) between opposing end faces of the the first enclosure ENCL1_CON1_P1, ENCL1_CON1_P2 comprising the inlet INL and the outlet OUTL.

Figure 2 shows schematically a block diagram of an assembly ASBY1 in a perspective view according to an exemplarily embodiment. The assembly ASBY1 comprises the connector CON1 and the first cable CABLE1 is connected to the connector CON1. The elements in Figure 2 that correspond to elements of Figure 1 have been designated by same reference numerals.

The first cable CABLE1 may be for example a hybrid cable comprising a coaxial cable and six optical fibres F1, ..., F6 located in a hollow inner conductor COND_in of the coaxial cable. Alternatively, the hybrid cable may comprise less or more than six optical fibres. In a further alternative, the hybrid cable may comprise only a single conductor as a hollow conductor.

The first electrical contacting means CE1_out_1, CE1_out_2, CP_out_1 may be connected to an outer conductor COND_out of the first cable CABLE1 and the second electrical contacting means CE1_in_1, CE1_in_2 may be connected to the inner conductor COND_in of the first cable CABLE1. Preferably, the inner and the outer conductor COND_in, COND_out are corrugated conductors. Alternatively, the inner and/or the outer conductor COND_in, COND_out may comprise a flat surface.

Preferably, the assembly ASBY1 comprises a further connector CON2 and the first cable CABLE1 is connected to the connector CON2.

The only difference between the further connector CON2 and the connector CON1 may be a number of three cables CABLE2_1, CABLE2_2, CABLE2_3 applied through a single opening or three separate openings of the first enclosure ENCL1_CON1_P1, ENCL1_CON1_P2 to the inside of the first enclosure ENCL1_CON1_P1, ENCL1_CON1_P2 and connected in parallel connection to the first and the second electrical contacting means CE1_out_1, CE1_out_2, CP_out_1, CE1_in_1, CE1_in_2 of the connector CON2.

The cable CABLE1 may comprise an outer protective layer PL1 such as a plastic jacket surrounding the outer conductor COND_out.

Preferably, the cable CABLE1 may comprise an inner protective layer PL2 such as a plastic jacket between the optical fibres F1, ..., F6 and the inner hollow conductor COND_in.

Preferably, the inner protective layer PL2 and the optical fibres F1, ..., F6 protrude from the outlets OUTL of the connectors CON1, CON2. Even more preferably, the optical fibres F1, ..., F6 protrude from end faces of the inner protective layer PL2.

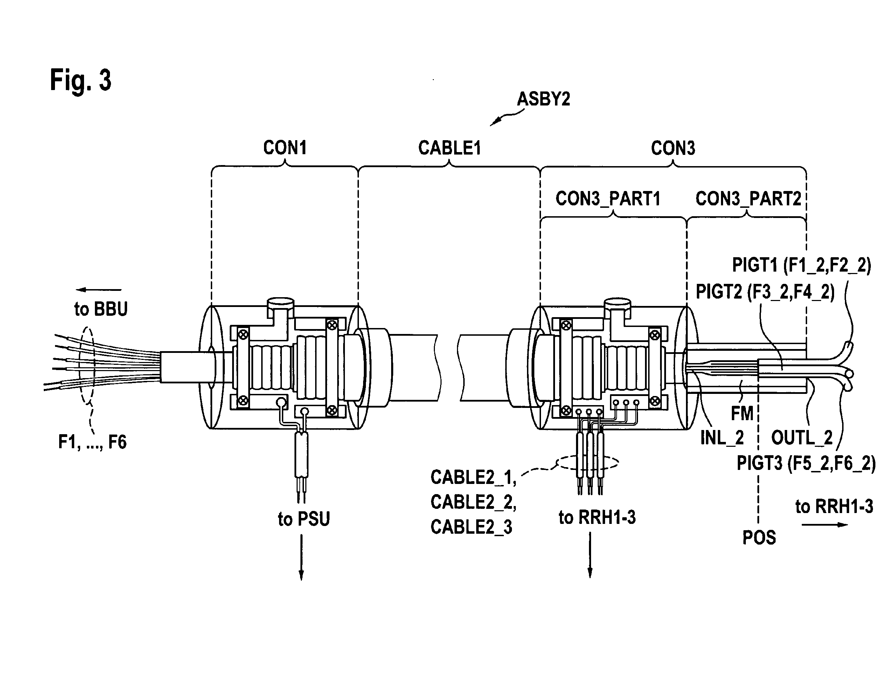

Figure 3 shows schematically a block diagram of an assembly ASBY2 in a perspective view according to a further exemplarily embodiment. The elements in Figure 3 that correspond to elements of Figure 1 and Figure 2 have been designated by same reference numerals. The difference between the assembly ASBY2 and the assembly ASBY1 of Figure 2 correspond to an exchange of the connector CON2 by a connector CON3. An enclosure of the connector CON3 comprises a first part CON3_PART1 and a second part CON3_PART2. The first part CON3_PART1 may be identical to the connector CON2 shown in Figure 2. Alternatively, the first part CON3_PART1 may be for example identical to the connector CON1. The second part CON3_PART2 may be for example hollow cylinder comprising a first fiber pigtail PIGT1, a second fiber pigtail PIGT2 and a third fiber pigtail PIGT3 protruding from the second part CON3_PART2. The fiber pigtails PIGT1, PIGT2, PIGT3 are preferably located centrally along a longitudinal axis of the hollow cylinder.

The outlet OUTL of the first part CON3_PART1 passes into an inlet INL2 of the second part CON3_PART2.

The fiber pigtails PIGT1, PIGT2, PIGT3 may be for example outdoor pigtails adapted to certain environmental conditions such as a certain temperature range or a certain humidity range.

The first pigtail PIGT1 may comprise a seventh optical fibre F1 _2, which is spliced to the first optical fibre F1 and may comprise an eighth optical fibre F2_2, which is spliced to the second optical fibre F2. The second pigtail PGT2 may comprise a ninth optical fibre F3_2, which is spliced to the third optical fibre F3 and may comprise an tenth optical fibre F4_2, which is spliced to the fourth optical fibre F4. The third pigtail PIGT3 may comprise an eleventh optical fibre F5_2, which is spliced to the fifth optical fibre F5 and may comprise a twelfth optical fibre F6_2, which is spliced to the sixth optical fibre F6. The optical fibre F1 to F6 are terminated inside the second part CON3_PART2 by splices at a position POS. Preferably the position POS is located within a middle third of a length of the hollow cylinder.

The pigtails PIGT1 to PIGT3 may comprise protective tubes enclosing in each case two of the optical fibres F1_2 to F6_2.

In further alternatives, the pigtails comprise one optical fibre or more than two optical fibres.

The optical fibres F1 to F6 and the optical fibres F1_2 to F6_2 may be single-mode or multi-mode fibres.

Preferably, the optical fibres F1 to F6 protrude from a first front side of the second part CON3_PART2 with an emersion length, which is adapted to a length of the first cable CABLE1 in which the optical fibres F1 to F6 can be inserted. More preferably, the emersion length is larger than the length of the first cable CABLE1.

The second part CON3_PART2 may be for example a sleeve, an adapter or a connector for mounting the second part CON3_PART2 to the first part CON3_PART1 of the connector CON3 by using for example screws or by using an internal screw thread at the second part CON3_PART2 to be screwed to an outer screw thread of the first part CON3_PART1. Alternatively, the first part CON3_PART1 and the second part CON3_PART2 of the connector CON3 are made from a single work piece are not removable from each other.

A material of the second part CON3_PART2 may be for example aluminium, stainless steel, Polyamid 6, Polyethylene (PE = polyethylene) or polyvinyl chloride (PVC = polyvinyl chloride).

Instead of using the fiber pigtail PIGT1, PIGT2, PIGT3, the optical fibres F1 to F6 may range from a first end face of the second part CON3_PART2 to a second end face of the second part CON3_PART2 and protrude from the first and the second end face of the second part CON3_PART2.

In a further alternative, indoor pigtails may be used instead of the outdoor pigtails PIGT1 to PIGT3, if the assembly ASBY2 may be applied according to an indoor application or if the assembly ASBY2 is located at a transition from an outdoor location comprising the first cable CABLE1 to an indoor location comprising the indoor pigtails.

The optical fibres F1 to F6 are fixed within the second part CON3_PART2 for example by a filler material FM. Thereby, the filler material FM may enclose the splices and may have also a sealing functionality for the end face of the first cable CABLE1. More preferably, the filler material FM fills out a complete hollow space of the first hollow cylinder.

The filler material FM may be for example a two-component adhesive, epoxy, silicon, vulcanized rubber or polyurethane (PU = polyurethane). The first inner diameter of the first hollow cylinder may be adapted to a number of the optical fibres F1 to F6. Furthermore, the first inner diameter of the first hollow cylinder may be adapted to a flow behaviour of filler material FM in a molten or liquid state.

The filler material FM preferably encloses the optical fibres F1 to F6 and/or the fiber pigtails PIGT1, PIGT2, PIGT3 over the length of the first hollow cylinder. The length of the first hollow cylinder may be adapted to a consistency or stiffness of the filler material FM and/or to a mechanical force impacting on the optical fibres F1 to F6 during operation of the optical fibres F1 to F6. The filler material FM preferably enclose the optical fibres F1 to F6 over a length of the optical fibres F1 to F6 in a range between 1 cm and 10 cm.

Preferably, distances between end pieces of the optical fibres F1 to F6 within the first inner hollow cylinder are larger than distances between the optical fibres F1 to F6 protruding from the second part CON3_PART2. This allows the filler material FM to get between the end pieces of the optical fibres F1 to F6 and to enclose each of the end pieces of the optical fibres F1 to F6 separately. Thereby, the fixation for the optical fibres F1 to F6 can be improved.

An inner diameter of the inner hollow conductor COND_in is adapted to comprise the optical fibres F1 to F6 and is larger than an overall outer diameter of a closely grouped arrangement of the optical fibres F1 to F6. Preferably, the inner and outer conductor COND_in, COND_out of the first cable CABLE1 are terminated at one or both end faces of the first cable CABLE1 by one of the connectors CON1, CON2 and CON3.

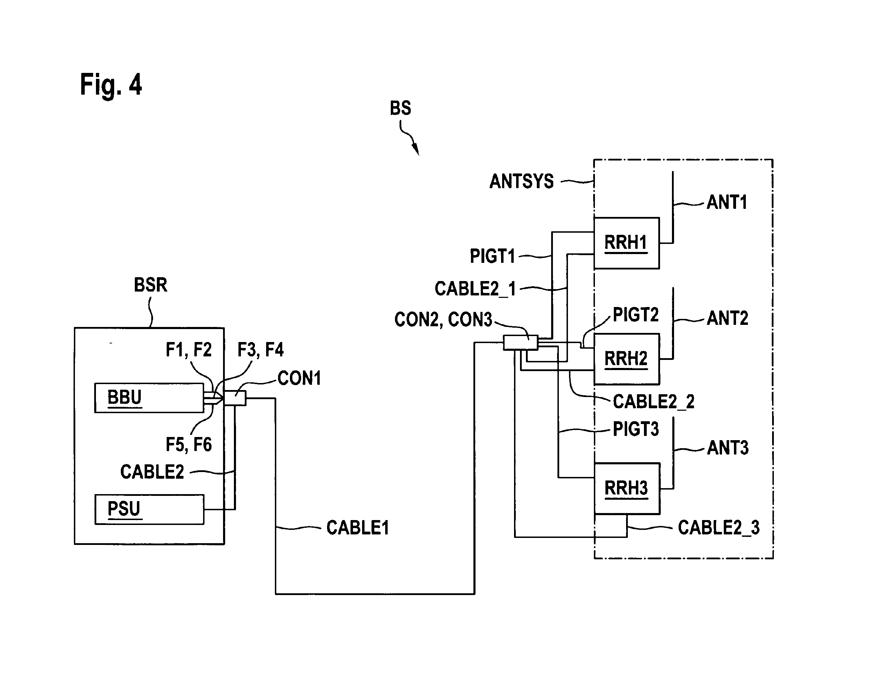

Figure 4 shows schematically a block diagram of a base station BS according to an application of the invention. The elements in Figure 4 that correspond to elements of Figure 1, Figure 2 or Figure 3 have been designated by same reference numerals.

The base station BS comprises basically a base station rack BSR, an antenna system ANTSYS, the cable CABLE 1 as a feeder cable for providing electrical power from the base station rack BSR to the antenna system ANTSYS and for providing signaling data from the base station rack BSR to the antenna system ANTSYS in a downlink direction and from the antenna system ANTSYS to the base station rack BSR in an uplink direction.

The base station rack BSR may be located for example at ground level and the antenna system ANTSYS may be located on top of a roof of a building or on top of a freestanding antenna most.

The base station rack BSR comprises a base band unit BBU and a power supply unit PSU. The base band unit BBU is adapted to provide preferably digital optical signalling data or user data to be transmitted to radio remote heads RRH1, RRH2, RRH3. The radio remote heads RRH1, RRH2, RRH3 are adapted to transform the optical downlink data into radio frequency signals and to provide the radio frequency signals to the antenna system ANTSYS.

The antenna system ANTSYS transmits the radio frequency signals to mobile stations connected via wireless links to the base station BS. A corresponding processing is provided in the uplink direction from the mobile station via the antenna system ANTSYS and the radio remote heads RRH1, RRH2, RRH3 to the base band unit BBU. This is common knowledge and therefore not explained in more detail.

The power supply unit PSU is connected by the cable CABLE2 to the connector CON1. The radio remote heads RRH1, RRH2, RRH3 are connected by the cables CABLE2_1, CABLE2_2, CABLE2_3 to the connector CON2 or CON3.

The radio remote heads RRH1, RRH2, RRH3 comprises one or several antennas ANT1, ANT2, ANT3 for radio links between the radio remote heads RRH 1, RRH2, RRH3 and one or several mobile stations such as mobiles, notebooks or PDAs PDA = personal digital assistant).

Preferably, each radio remote head RRH1, RRH2, RHH3 provides radio coverage for a separate sector of a radio cell of the base station BS.

The base band unit BBU may be connected to the first radio remote head RRH1 by the optical fibres F1 F2 via the cable CABLE1 and by the first pigtail PIGT1. The base band unit BBU may be connected to the second radio remote head RRH2 by the optical fibres F3, F4 via the cable CABLE1 and by the second pigtail PIGT2. The base band unit BBU may be connected to the third radio remote head RRH3 by the optical fibres F5, F6 via the cable CABLE1 and by the third pigtail PIGT3.

Preferably, a first one of the fibres F1, F2 is used for a downlink connection from the base band unit BBU to the first radio remote head RRH 1 and a second one of the fibres F1, F2 is used for an uplink connection from the first radio remote head RRH1 to the base band unit BBU. Similarly, the optical fibres F3, F4 and the second pigtail PIGT2 may be connecting the base band unit BBU with the second radio remote head RRH2 and the optical fibres F5, F6 and the third pigtail PIGT3 may be connecting the base band unit BBU with the third radio remote head RRH3.

Alternatively, a single optical fibre is connecting the base band unit BBU to one of the radio remote heads RRH1 to RRH3. In such a case, downlink and uplink signals may use different optical wavelengths and optical add-drop multiplexers may be used at the base band unit BBU and the radio remote heads RRH1 to RRH3 for adding and dropping the optical wavelengths.

In further alternatives, the base station BS may comprise less or more than three radio remote heads and the first cable CABLE1 comprises less or more than six optical fibres.

## Claims

1. A connector (CON1, CON2, CON3) comprising a first enclosure (ENCL1_CON1_P1, ENCL1_CON1_P2, CON3_PART1) and at least one electrical contacting means (CE1_out_1, CE1_out_2, CP_out_1, CE1_in_1, CE1_in_2), said first enclosure (ENCL1_CON1_P1, ENCL1_CON1_P2, CON3_PART1) comprises an inlet (INL) for a first cable (CABLE1) and an outlet (OUTL) for said first cable (CABLE1), said first enclosure (ENCL1_CON1_P1, ENCL1_CON1_P2, CON3_PART1), said inlet (INL) and said outlet (OUTL) are adapted to completely enclose a first electrical connection between said at least one electrical contacting means (CE1_out_1, CE1_out_2, CP_out_1, CE1_in_1, CE1_in_2) of said connector (CON1, CON2, CON3) and at least one conductor (COND_in, COND_out) of said first cable (CABLE1).

2. Connector (CON1, CON2, CON3) according to claim 1, wherein said first enclosure (ENCL1_CON_P1, ENCL_1_CON1_P2, CON3_PART1) is split into a first part (ENCL1_CON1_P1) comprising said at least one electrical contacting means (CE1_out_1, CE1_out_2, CP_out_1, CE1_in_1, CE1_in_2) of said connector (CON1, CON2, CON3) and a second part (ENCL1_CON1_P2) removable from said first part (ENCL1_CON1_P1).

3. Connector (CON1, CON2, CON3) according to claim 2, wherein said first enclosure (ENCL1_CON1_P1, ENCL1_CON1_P2, CON3_PART1) comprises a first sealing (SL1_1) between said first part (ENCL1_CON1_P1) and said second part (ENCL1_CON1_P2).

4. Connector (CON1, CON2, CON3) according to any of the preceding claims, wherein said first enclosure (ENCL1_CON1_P1, ENCL1_CON1_P2, CON3_PART1) consists of an electrical conductive material.

5. Connector (CON1, CON2, CON3) according to claim 4, wherein said connector (CON1, CON2, CON3) further comprises means for overvoltage protection (OPM1) and wherein said means for overvoltage protection (OPM1) are electrically connected to said first enclosure (ENCL1_CON1_P1, ENCL1_CON1_P2, CON3_PART1) and said at least one electrical contacting means (CE1_out_1, CE1_out_2, CP_out_1, CE1_in_l, CE1_in_2) of said connector (CON1, CON2, CON3).

6. Connector (CON1, CON2, CON3) according to any of the preceding claims, wherein said inlet (INL) comprises a second sealing (SL1_2) and said outlet (OUTL) comprise a third sealing (SL1_3) and wherein said second and said third sealing (SL1_2, SL1_3) are adapted to seal said first enclosure (ENCL1_CON_1_P1, ENCL1_CON1_P2, CON3_PART1) towards on outer surface of said first cable (CABLE1).

7. Connector (CON1, CON2, CON3) according to any of the preceding claims, wherein said connector (CON1, CON2, CON3) further comprises at least one second cable (CABLE2, CABLE2_1, CABLE2_2, CABLE2_3), wherein a conductor (CABLE2_C1, CABLE2_C2) of said at least one second cable (CABLE2, CABLE2_1, CABLE2_2, CABLE2_3) is electrically connected to said at least one electrical contacting means (CE1_out_1, CE1_out_2, CP_out_1, CE1_in_1, CE1_in_2) of said connector (CON1, CON2, CON3), wherein said first enclosure (ENCL1_CON1_P1, ENCL1_CON1_P2, CON3_PART1) comprises at least one opening and wherein said at least one opening is used for an extension of said at least one second cable (CABLE2, CABLE2_1, CABLE2_2, CABLE2_3) from an inside of said first enclosure (ENCL1_CON1_P1, ENCL1_CON1_P2, CON3_PART1) to an outside of said first enclosure (ENCL1_CON1_P1, ENCL1_CON1_P2, CON3_PART1).

8. Connector (CON1, CON2, CON3) according to claim 7, wherein said inlet (INL) and said outlet (OUTL) are arranged at opposing end faces of said first enclosure (ENCL1_CON1_P1, ENCL1_CON1_P2, CON3_PART1) and wherein said at least one opening is arranged adjacent to said inlet (INL) or said outlet (OUTL) or at a lateral surface of said first enclosure (ENCL1_CON1_P1, ENCL1_CON1_P2, CON3_PART1) between said opposing end faces.

9. Connector (CON1, CON2, CON3) according to claim 7 or 8, wherein said at least one opening comprises a fourth sealing (SL1_4, SL2_4, SL2_5, SL2_6) between said first enclosure (ENCL1_CON1_P1, ENCL1_CON1_P2, CON3_PART1) and an outer surface of said at least one second cable (CABLE2, CABLE2_1, CABLE2_2, CABLE2_3).

10. connector (CON1, CON2, CON3) according to any of the preceding claims, wherein said first cable (CABLE1) is a coaxial cable, wherein said connector (CON1, CON2, CON3) comprises second electrical contacting means (CE1_out_1), CE1_out_2, CP_out_1, CE1_in_1, CE1_in_2), wherein said first enclosure (ENCL1_CON1_P1, ENCL1_CON1_P2, CON3_PART1), said inlet (INL) and said outlet (OUTL) are adapted to completely enclose a second electrical connection between said second electrical contacting means (CE1_out_1, CE1_out_2, CP_out_1, CE1_in_1, CE1_in_2) of said connector (CON1, CON2, CON3) and a second conductor (COND_in, COND_out) of said first cable (CABLE1), wherein said at least one electrical contacting means (CE1_out_1, CE1_out_2, CP_out_1, CE1_in_1, CE1_in_2) of said connector (CON1, CON2, CON3) are adapted to connect to an inner conductor (COND_in) of said coaxial cable and wherein said second electrical contacting means (CE1_out_1, CE1_out_2, CP_out_1, CE1_in_1, CE1_in_2) of said connector (CON1, CON2, CON3) are adapted to connect to an outer conductor (COND_out) of said coaxial cable.

11. Connector (CON3) according to any of the preceding claims, wherein said connector (CON3) further comprises a second enclosure (CON3_PART2) with an inlet (INL_2) for at least one optical fibre (F1, ..., F6, PIGT1, PIGT2, PIGT3) and an outlet (OUTL_2) for said at least one optical fibre (F1, ...,F6, PIGT1, PIGT2, PIGT3), wherein said at least one optical fibre (F1, ..., 6, PIGT1, PIGT2, PIGT3) protrudes from said inlet (INL_2) and said outlet (OUTL_2) of said second enclosure CON3_PART2), and wherein said outlet (OUTL) of said first enclosure (CON3_PART1) passes into said inlet (INL_2) of said second enclosure (CON3_PART2).

12. Connector (CON3) according to claim 11, wherein said second enclosure (CON3_PART2) is mountable to said first enclosure (CON3_PART1).

13. An assembly (ASBY1, ASBY2) comprising a cable (CABLE1) and at least one connector (CON1, CON2, CON3) according to any of the preceding claims and connected to said cable (CABLE1).

14. Assembly (ASBY1, ASBY2 according to claim 13, wherein a hollow conductor of said cable (CABLE1) comprises at least one optical fiber (F1, ..., F6) and wherein said at least one optical fibre (F1, ..., F6) protrudes from an open end of said cable (CABLE1).

15. Assembly (ASBY1, ASBY2 according to any of the claims 13 or 14, wherein said at least one conductor (COND_in, COND_out) of said cable (CABLE1) is terminated by said at least one connector (CON1, CON2, CON3).

## Amended claims

### Amended claims in accordance with Rule 137(2) EPC.

**1.** A connector (CON1, CON2, CON3) comprising a first enclosure (ENCL1 _CON1_P1, ENCL1_CON1_P2, CON3_PART1) and at least one electrical contacting means (CE1_out_1, CE1_out_2, CP_out_1, CE1_in_1, CE1_in_2), said first enclosure (ENCL1_CON1_P1, ENCL1_CON1_P2, CON3_PART1) comprises an inlet (INL) for a first cable (CABLE1) and a further opening (OUTL), said first enclosure (ENCL1_CON1_P1, ENCL1_CON1_P2, CON3_PART1), said inlet (INL) and said further opening (OUTL) are adapted to completely enclose a first electrical connection between said at least one electrical contacting means (CE1_out_1, CE1_out_2, CP_out_1, CE1_in_1, CE1_in_2) of said connector (CON1, CON2, CON3) and at least one conductor (COND_in, COND_out) of said first cable (CABLE1),
**characterized in that** said further opening (OUTL) is an outlet (OUTL) for said first cable (CABLE1) and said connector (CON1, CON2, CON3) is adapted for providing an extension of an end piece of said first cable (CABLE1) from said first enclosure (ENCL1-CON]1_P1, ENCL1_CON1_P2, CON3_PART1) and for applying at least one further separate connector to at least one further conductor of said first cable (CABLE1) protruding from an end face of said first cable (CABLE1) or for applying at least one splice to at least one optical fibre (F1, ..., F6) protruding from an end face of said first cable (CABLE1).

**2.** Connector (CON1, CON2, CON3) according to claim 1, wherein a first one of central openings of said first enclosure (ENCL1_CON1_P1, ENCL1_CON1_P2, CON3_PART1) is used as said inlet (INL) and a second one of central openings of said first enclosure (ENCL1_CON1_P1, ENCL1_CON1_P2, CON3_PART1) is used as said outlet (OUTL) and wherein said at least one electrical contacting means (CE1_out_1, CE1_out_2, CP_out_1, CE1_in_1, CE1_in_2) is arranged around a central longitudinal axis of said first enclosure (ENCL1_CON1_P1, ENCL1_CON1_P2, CON3_PART1).

**3.** Connector (CON1, CON2, CON3) according to any of the preceding claims, wherein said first enclosure (ENCL1_CON1_P1, ENCL1_CON1_P2, CON3_PART1) consists of an electrical conductive material.

**4.** Connector (CON1, CON2, CON3) according to claim 3, wherein said connector (CON1, CON2, CON3) further comprises means for overvoltage protection (ORM1) and wherein said means for overvoltage protection (OPM1) are electrically connected to said first enclosure (ENCL1_CON1_P1, ENCL1_CON1_P2, CON3_PART1) and said at least one electrical contacting means (CE1_out_1, CE1_out_2, CP_out_1, CE1_in_1, CE1_in_2) of said connector (CON1, CON2, CON3).

**5.** Connector (CON1, CON2, CON3) according to any of the preceding claims, wherein said first cable (CABLE1) is a coaxial cable, wherein said connector (CON1, CON2, CON3) comprises second electrical contacting means (CE1_out_1, CE1_out_2, CP_out_1), wherein said first enclosure (ENCL1_CON1_P1, ENCL1_CON1_P2, CON3_PART1), said inlet (INL) and said outlet (OUTL) are adapted to completely enclose a second electrical connection between said second electrical contacting means (CE1_out_1, CE1_out_2, CP_out_1) of said connector (CON1, CON2, CON3) and a second conductor (COND_in, COND_out) of said first cable (CABLE1), wherein said at least one electrical contacting means (CE1_out_1, CE1_out_2, CP_out_1, CE1_in_1, CE1_in_2) of said connector (CON1, CON2, CON3) are adapted to connect to an inner conductor (COND_in) of said coaxial cable and wherein said second electrical contacting means (CE1_out_1, CE1_out_2, CP_out_1) of said connector (CON1, CON2, CON3) are adapted to connect to an outer conductor (COND_out) of said coaxial cable.

**6.** Connector (CON3) according to any of the preceding claims, wherein said connector (CON3) further comprises a second enclosure (CON3_PART2) with an inlet (INL_2) for at least one optical fibre (F1, ..., F6, PIGT1, PIGT2, PIGT3) of said first cable (CABLE1) and an outlet (OUTL_2) for said at least one optical fibre (F1, ..., F6, PIGT1, PIGT2, PIGT3), wherein said at least one optical fibre (F1, ..., F6, PIGT1, PIGT2, PIGT3) protrudes from said inlet (INL_2) and said outlet (OUTL_2) of said second enclosure CON3_PART2), and wherein said outlet (OUTL) of said first enclosure (CON3_PART1) passes into said inlet (INL_2) of said second enclosure (CON3_PART2).

**7.** Connector (CON3) according to claim 6, wherein said second enclosure (CON3_PART2) is mountable to said first enclosure (CON3_PART1).

**8.** Connector (CON3) according to claim 6, wherein said at least one optical fibre (F1, ..., F6, PIGT1, PIGT2, PIGT3) is fixed within said second enclosure (CON3_PART2) by a filler material (FM).

**9.** Connector (CON3) according to claim 8, wherein said second enclosure (CON3_PART2) is a hollow cylinder and wherein said filler material (FM) fills out a complete hollow space of said hollow cylinder.

**10.** Connector (CON3) according to claim 9, wherein an inner diameter of said hollow cylinder is adapted to a flow behavior of said filler material (FM) in a molten or liquid state.

**11.** Connector (CON3) according to claim 9, wherein a length of said hollow cylinder is adapted to a consistency or stiffness of said filler material (FM) and/of to a mechanical force impacting on said at least one optical fibre (F1, ..., F6, PIGT1, PIGT2, PIGT3) during operation of said at least one optical fibre (F1,..., F6, PIGT1, PIGT2, PIGT3).

**12.** An assembly (ASBY1, ASBY2) comprising a cable (CABLE1) and at least one connector (CON1, CON2, CON3) according to any of the preceding claims and connected to said cable (CABLE1).

**13.** Assembly (ASBY1, ASBY2) according to claim 12, wherein a hollow conductor of said cable (CABLE1) comprises at least one optical fiber (F1, ..., F6) and wherein said at least one optical fibre (F1,..., F6) protrudes from an open end of said cable (CABLE1).

**14.** Assembly (ASBY1, ASBY2) according to ony of the claims 12 or 13, wherein said at least one conductor (COND_in, COND_out) of said cable (CABLE1) is terminated by said at least one connector (CON1, CON2, CON3).

**15.** Assemby (ASBY1, ASBY2) according to claim 12, wherein said cable (CABLE1) is a coaxial cable comprising at least one additional conductor inside a hollow inner conductor of said coaxial cable.
